# EUROPÄISCHE PATENTSCHRIFT

(11) **EP 1 929 173 B1**
(45) Veröffentlichungstag und Bekanntmachung des Hinweises auf die Patenterteilung: **21.01.2009**
(21) Anmeldenummer: 05806766.1
(22) Anmeldetag: 28.09.2005
(51) Int. Cl.: F16H 1/20, F16H 1/26, F16H 57/02

(54) **STIRNRADGETRIEBE**
CYLINDRICAL GEAR MECHANISM
REDUCTEUR A ENGRENAGES CYLINDRIQUES

(43) Veröffentlichungstag der Anmeldung: 11.06.2008
(73) Patentinhaber: Getriebebau NORD GmbH & Co. KG, 22941 Bargteheide (DE)
(72) Erfinder: BOUCHE, Bernhard, 22941 Bargteheide (DE)
(74) Vertreter: Glawe, Delfs, Moll
(86) Internationale Anmeldenummer: PCT/EP2005/010494
(87) Internationale Veröffentlichungsnummer: WO 2007/036241

(56) Entgegenhaltungen:
- EP-A- 0 507 309
- EP-A- 0 686 788
- EP-A- 1 091 144
- EP-A- 1 582 775
- DE-A1- 3 133 635
- DE-A1- 4 227 702
- US-A1- 2002 035 883

## Beschreibung

Die Erfindung betrifft ein zwei- oder dreistufiges Stirnradgetriebe gemäß dem Oberbegriff des Anspruchs 1. Ein bekanntes Getriebe dieser Art beschreibt die DE-A-4227702. Weiterhin zeigt die DE-A-3133635 ein einstückiges Gehäuse, das antriebsseitig durch eine Montageöffnung zugänglich ist. Diese ist durch einen Deckel verschlossen. Unter einem Deckel ist in diesem Zusammenhang auch der Flansch eines Antriebsmotors oder eines Zwischenadapters zu verstehen. Durch den Deckel ist ein Eintriebsritzel in das Getriebe eingeführt, das direkt oder durch eine erste Getriebestufe auf das Zwischenzahnrad einer Zwischenwelle wirkt. Diese treibt über ein Zwischenritzel das Abtriebszahnrad einer Abtriebswelle an, die mit ihren beiden Abtriebswellenlagern in einer er-sten Aufnahmebohrung angeordnet ist. Das Abtriebszahnrad ist auf dieser Welle fliegend gelagert. Es muß nach der Montage der Abtriebswelle und ihrer Lager separat montiert werden, weil der direkte Montageweg zwischen der Aufnahmebohrung durch ein Lagerauge der Zwischenwelle versperrt ist. Auch deren Teile müssen konstruktionsbedingt separat montiert werden. Zwar ist es bekannt (EP-A-507309, Fig. 1), eine Welle mit ihren Zahnrädern und Lagern als einheitlich in das Gehäuse einzubringende Montageeinheit auszubilden; wie dies bei einem zwei- oder dreistufigen Stirnradgetriebe in einem einstückigen Gehäuse verwirklicht werden könnte, das von einer Montageöffnung her zu montieren ist, bleibt offen.

Der Erfindung liegt die Aufgabe zugrunde, den Montageaufwand für ein Getriebe gemäß Oberbegriff des Anspruchs 1 bei mäßigem Lager- und Raumaufwand zu verringern. Die Lösung liegt in den Merkmalen des Anspruchs 1.

Beide Wellen sind mit den zugehörigen Zahnrädern und Wellen als vormontierte Einheiten von der Montageseite her in ihre einander überschneidenden Aufnahmebohrungen einsetzbar. Dabei sind die Lager der Abtriebswelle beiderseits des Abtriebszahnrads und die Lager der Zwischenwelle beiderseits des Zwischenritzels angeordnet. Der Montageweg zwischen den Aufnahmebohrungen und der Montageöffnung ist frei. Dank diesen Merkmalen können die als Montageeinheit vorbereiteten Wellen mit ihren Zahnrädern und Lagern in einem Schritt von der Montageöffnung her in ihre Aufnahmebohrungen eingeschoben werden. Der Montagevorgang wird dadurch wesentlich verkürzt und vereinfacht, zumal die Montage von einer und derselben Seite her stattfindet. Verbunden damit ist der Vorteil, daß das hinterschnittfreie Gehäuse kernlos geformt werden kann und auch die Bearbeitung der Aufnahmebohrungen von einer und derselben Seite her hinterschnittfrei stattfinden kann, ohne daß das Gehäuse zwischen der Bearbeitung der beiden Aufnahmebohrungen gewendet zu werden braucht. Die Anordnung des Abtriebszahnrads zwischen den zugehörigen Lagern reduziert die von den Lagern und dem Gehäuse aufzunehmenden Kräfte. Außerdem wird Baulänge eingespart.

Für die leichte Montierbarkeit kommt es nicht eigentlich auf die Hinterschnittfreiheit an. Vielmehr muß die Aufnahmebohrung für die Abtriebswelle im Bereich des antriebsseitigen Abtriebswellenlagers mindestens einen so großen Durchmesser haben, daß das Abtriebszahnrad und das abtriebsseitige Abtriebswellenlager hindurchpassen. Bei der Zwischenwelle genügt es entsprechend, wenn die Aufnahmebohrung beim montageseitigen Lager einen so großen Durchmesser hat, daß das Zwischenritzel und das abtriebsseitige Lager der Zwischenwelle hindurchpassen. Diese Bedingungen verwirklicht man am einfachsten durch Hinterschnittfreiheit. Jedoch kommt es nicht darauf an, ob die Aufnahmebohrung möglicherweise zwischen den Lagerpositionen noch eine Eindrehung aufweist.

Daß die Zwischenwellenlager dem Zwischenritzel benachbart sind, braucht nicht zu besagen, daß sie unmittelbar neben dem Ritzel angeordnet sind. Erfindungsgemäß ist das abtriebsseitige erste Zwischenwellenlager unmittelbar dem Zwischenritzel benachbart, und es ist zwischen dem Abtriebszahnrad und dem abtriebsseitigen Abtriebswellenlager gelegen. Entsprechend kann das antriebsseitige, zweite Zwischenwellenlager unmittelbar dem Zwischenritzel benachbart sein und dann teilweise zwischen dem Abtriebszahnrad und dem antriebsseitigen Abtriebswellenlager gelegen sein. Die unmittelbare Nachbarschaft der Lager zu dem Zwischenritzel reduziert die in diesem Bereich von der Zwischenwelle aufzunehmenden Biegemomente. Zwar wird durch diese Maßnahmen der Abstand zwischen dem Abtriebszahnrad und den Abtriebswellenlagern vergrößert, so daß dort entsprechend höhere Biegemomente auftreten; diese fallen bei der Abtriebswelle nicht so ins Gewicht, weil diese wegen des höheren zu übertragenden Drehmoments ohnehin einen größeren Durchmesser haben muß.

Daß die Lager und Zahnräder der beiden Welleneinheiten im montierten Zustand ineinandergreifen, hindert ihre Montierbarkeit nicht; sie werden in dem beabsichtigten Eingriffszustand vor der Montage zusammengesetzt und in diesem Zustand gleichzeitig in die Aufnahmebohrungen eingeschoben.

Nach einem besonderen Merkmal der Erfindung ist für die Zwischenwelle ein drittes Zwischenwellenlager vorgesehen, das antriebsseitig von dem Zwischenzahnrad an dem Deckel angeordnet ist. Dies hat den Vorteil, daß die Zwischenwelle auch im Bereich des Zwischenzahnrads sowie zwischen diesem und dem zweiten Zwischenwellenlager verhältnismäßig dünn ausgebildet werden kann, da sie von den hohen Biegemomenten einer fliegenden Lagerung des Zahnrads entlastet ist. Die dreifache Lagerung, die man wegen ihrer statischen Überbestimmtheit normalerweise meidet, läßt sich im vorliegenden Zusammenhang ohne die sonst zu befürchtenden Nachteile verwenden, weil das deckelseitige Zwischenwellenlager zur Zentrierung des Deckels dient und daher jedenfalls mit den anderen Zwischenwellenlagern fluchtet.

Zumindest bei Schrägverzahnung bedürfen die beiden Wellen der axialen Festlegung. Diese kann nach der Erfindung bei der Abtriebswelle mit Vorteil dadurch geschehen, daß der Deckel einen die Axialstellung des antriebsseitigen Abtriebswellenlagers bestimmenden Vorsprung aufweist.

Die Erfindung wird im folgenden näher unter Bezugnahme auf die Zeichnung erläutert, die ein vorteilhaftes Ausführungsbeispiel veranschaulicht. Es zeigen:
- Fig. 1: das Getriebe in Verbindung mit einem Ritzelmotor,
- Fig. 2: das Getriebe in Verbindung mit einem Zwischen- adapter,

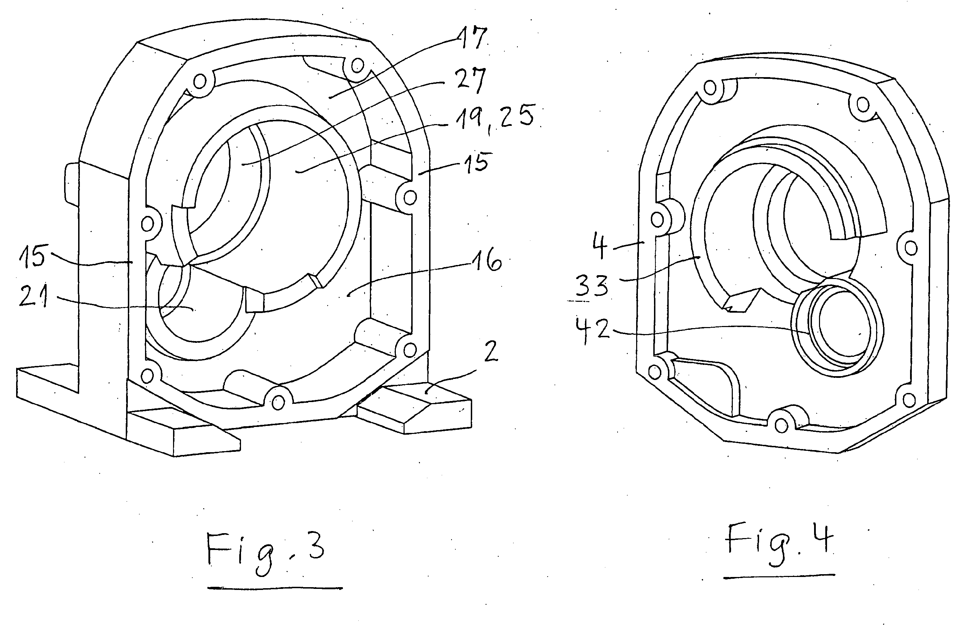

- Fig. 3: eine perspektivische Ansicht des Getriebegehäuses von der Montageöffnung her und
- Fig. 4: eine perspektivische Ansicht des Deckels von der Getriebeseite her.

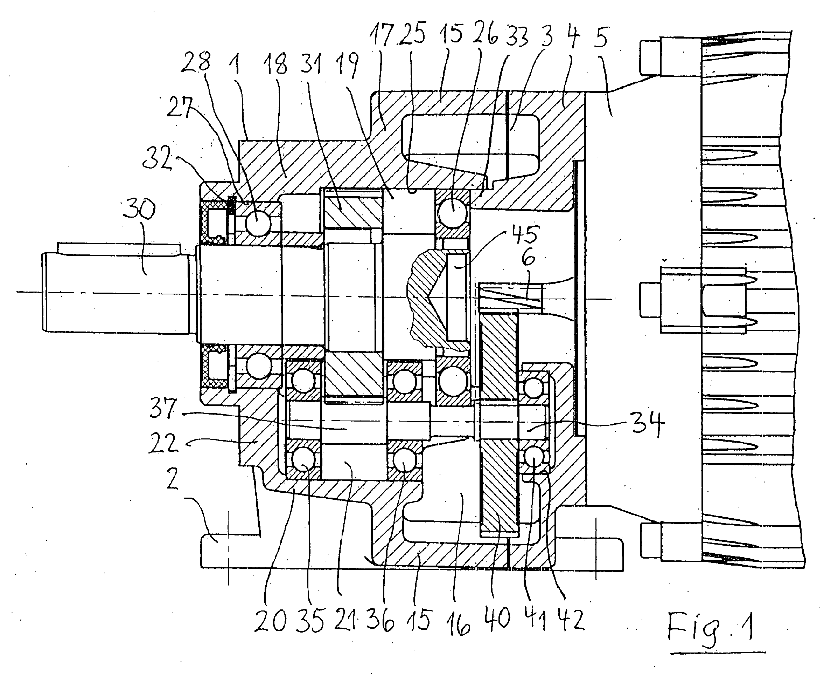

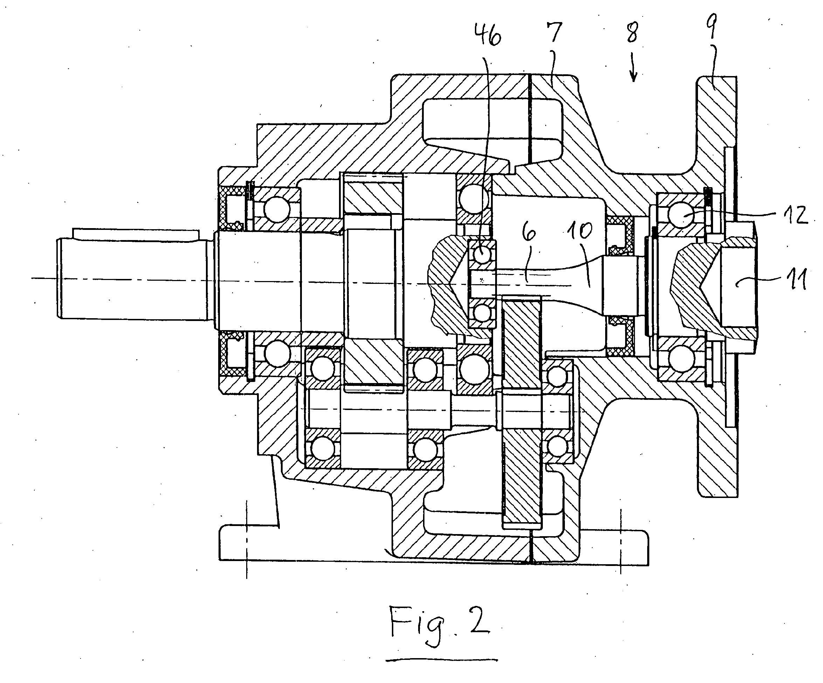

Das Getriebegehäuse 1 ruht auf einem Fuß 2. Seine in der Teilungsebene 3 liegende Montageöffnung wird durch einen Deckel 4 geschlossen. An diesem ist in der Ausführung gemäß Fig. 1 ein Ritzelmotor 5 mit Ritzel 6 angeflanscht. In der Ausführung gemäß Fig. 2 wird der Deckel von dem Teil 7 eines Zwischenadapters 8 gebildet, mit dessen Flansch 9 ein Normmotor zu verbinden ist. Der Adapter 8 enthält eine Adapterwelle 10 mit Motorkupplung 11 und Lager 12. Sie bildet das Ritzel 6, das in das Getriebe hineinragt.

Das Getriebegehäuse 1 weist eine Umfangswand 15 auf, die eine antriebsseitige Kammer 16 umschließt, die hinterschnittfrei die Montageöffnung bildet. Die Kammer 16 wird abtriebsseitig von einer Querwand 17 abgeschlossen, die mit dem Fuß 2 verbunden ist. Aus dieser Querwand springt an-und abtriebsseitig eine im wesentlichen zylindrische Wand 18 vor, die eine erste Aufnahmebohrung 19 enthält. Parallel dazu springt eine im wesentlichen zylindrische Wand 20 vor, die die zweite Aufnahmebohrung 21 enthält. Diese wird abtriebsseitig durch eine Querwand 22 geschlossen. Die Aufnahmebohrungen 19, 21 überschneiden oder durchdringen einander. Die Wände 18, 20 sind in dem Überschneidungsbereich ausgeschnitten, um den in den Aufnahmebohrungen befindlichen Zahnrädern/Ritzeln den gegenseitigen Eingriff zu ermöglichen.

Die erste Aufnahmebohrung 19 enthält eine Lagerbohrung 25 für das antriebsseitige Abtriebswellenlager 26 und eine Lagerbohrung 27 für das abtriebswellenseitige Abtriebswellenlager 28. Diese Lager stützen die Abtriebswelle 30, die zwischen den beiden Lagern 26, 28 das Abtriebszahnrad 31 trägt. In ihrer Längsrichtung ist die Abtriebswelle durch einen Sprengring 32 einerseits und einen Ansatz 33 des Deckels 4 andererseits gesichert. Der Sprengring könnte auch durch einen Gehäusebund ersetzt sein. Der Außendurchmesser des Lagers 26 und entsprechend der Innendurchmesser der Lagerbohrung 25 haben einen größeren Durchmesser als das Abriebszahnrad 31, und dieses hat einen größeren Durchmesser als das abriebsseitige Lager 28. Dies ist nicht zwingend. Es können auch gleiche Durchmesser vorgesehen werden. Es kommt darauf an, daß die Aufnahmebohrung 19 in der Zeichnung nach rechts zur Montageöffnung hin nicht hinterschnitten ist, damit die aus der Abtriebswelle 30, dem Abtriebszahnrad 31 und den Lagern 26, 28 bestehende, vormontierte Einheit von der Montageöffnung her in einem Schritt eingesetzt werden kann.

Die Zwischenwelle 34 wird von zwei Zwischenwellenlagern 35, 36 in der Aufnahmebohrung 21 gestützt, die dem Zwischenritzel 37 unmittelbar benachbart sind. Die Biegebeanspruchung der Zwischenwelle bleibt daher in diesem Bereich gering. Das abtriebsseitige Zwischenwellenlager 35 greift teilweise hinüber in die Aufnahmebohrung 19 der Abtriebswelle 30 und befindet sich dort in einem für diesen Zweck vorgesehenen Abstand zwischen dem abtriebsseitigen Abtriebswellenlager 28 und dem Abtriebszahnrad 31. Statt dessen können die beiden abtriebsseitigen Lager 28 und 35 der Abtriebswelle 30 und der Zwischenwelle 37 auch in derselben Ebene angeordnet sein, wenn ihr Durchmesser klein genug bemessen werden kann. Die beiden Aufnahmebohrungen 19, 21 würden sich dann in diesem Bereich nicht überschneiden. Die Baulänge kann durch eine solche Anordnung gegenüber derjenigen des Ausführungsbeispiels reduziert werden. Das Zwischenwellenlager 36 greift ebenfalls teilweise hinüber in die Aufnahmebohrung 19 der Abtriebswelle und liegt dort zwischen dem Abtriebszahnrad 31 und dem antriebsseitigen Abtriebswellenlager 26.

Die Zwischenwelle 34 trägt innerhalb der antriebsseitigen Kammer 16 des Getriebegehäuses das Zwischenzahnrad 40, das von dem Eintriebsritzel 6 angetrieben wird. das Zwischenzahnrad 40 könnte auch in bekannter Weise fliegend auf der Zwischenwelle 34 angeordnet sein. Wenn aber das Abtriebswellenlager 26 und das Zwischenwellenlager 36 - wie dargestellt - zueinander versetzt angeordnet sind, ergibt sich zwischen dem Zwischenwellenlager 36 und dem Zwischenzahnrad 40 ein axialer Abstand, der zu einer unerwünschten Biegebeanspruchung der Zwischenwelle in diesem Bereich führen würde. Diese unerwünschte Beanspruchung kann erfindungsgemäß durch ein drittes Lager 41 der Zwischenwelle vermieden werden, das in einer Lagerbohrung 42 im Deckel 4 (bzw. 7 bei der Ausführung gemäß Fig. 2) angeordnet ist.

Damit das dritte Zwischenwellenlager 41 korrekt mit den übrigen Lagern fluchtet, wird es zur Zentrierung des Deckels 4 bzw. 7 verwendet, der bei zweistufiger Ausführung des Getriebes keine weiteren Zentriermittel aufweist. Der Eingriff des Deckelvorsprungs 33 in die Lagerbohrung 25 ist mit Spiel ausgeführt, um eine unerwünschte Doppelpassung zu vermeiden. Die Ebene der Verbindungsfuge 3 zwischen Getriebegehäuse 1 und Deckel 4 verläuft lotrecht zur Achsrichtung des Getriebes, so daß von dorther keine die Zentrierung durch das Zwischenwellenlager störenden Kräfte zu erwarten sind.

Da die Aufnahmebohrung 21 ebenso wie die Aufnahmebohrung 19 zur Montageöffnung hin nicht hinterschnitten ist und auch kein sonstges Hindernis zwischen ihr und der Montageöffnung vorhanden ist, kann auch die vormontierte Zwischenwelleneinheit in einem Schritt eingesetzt werden.

Bei der Montage des Getriebes geht man so vor, daß zunächst die Abtriebswelle 30 mit den zugehörigen Lagern 26, 28 und dem Abtriebszahnrad 31 sowie die Zwischenwelle 34 mit ihren Lagern 35, 36, 41 und dem Zwischenzahnrad 40 zu Baueinheiten zusammengesetzt werden. Danach werden diese Einheiten gemäß ihrem beabsichtigten Eingriff zusammengefügt und gemeinsam von der Entnahmeöffnung her in die zugehörigen Aufnahmebohrungen eingeschoben. Es braucht dann nur noch der Deckel aufgesetzt zu werden

Die Abtriebswelle 30 enthält in ihrem antriebsseitigen Ende eine Lagerbohrung 45, die in der Ausführung gemäß Fig. 1 ungenutzt ist und in der Ausführung gemäß Fig. 2 ein Lager 46 für das Ende der Adapterwelle 10 enthält.

## Patentansprüche

1. zwei- oder dreistufiges Stirnradgetriebe mit einem einstückigen Gehäuse (1), das antriebsseitig eine Montageöffnung aufweist, die durch einen Deckel (4, 7) verschlossen ist, durch den ein Eintriebsritzel (6) eingeführt ist, das direkt oder über eine erste Getriebestufe auf das Zwischenzahnrad (40) einer Zwischenwelle (34) wirkt, die ein Zwischenritzel (37) trägt, das das Abtriebszahnrad (31) einer Abtriebswelle (30) antreibt, wobei die Abtriebswelle (30) als vormontierte Einheit mit dem Abtriebszahnrad (31) und den beiderseits des Abtriebszahnrads (31) angeordneten Abtriebswellenlagern (26, 28) von der Montageöffnung her in eine erste Aufnahmebohrung (19) einsetzbar ist, wobei die Zwischenwelle (34) als vormontierte Einheit mit zwei beiderseits dem Zwischenritzel (37) benachbarten, ersten und zweiten Zwischenwellenlagern (35, 36) von der Montageöffnung her in eine zweite Aufnahmebohrung (21) einsetzbar ist und ein freier Montageweg zwischen den Aufnahmebohrungen (19, 21) und der Montageöffnung vorhanden ist, und wobei das abtriebsseitige erste Zwischenwellenlager (35) unmittelbar dem Zwischenritzel (37) benachbart ist, **dadurch gekennzeichnet, dass** die zweite Aufnahmebohrung (21) die erste Aufnahmebohrung (19) überschneidet und dass das abtriebsseitige erste Zwischenwellenlager (35) teilweise zwischen dem Abtriebszahnrad (31) und dem abtriebsseitigen Abtriebswellenlager (28) gelegen ist.

2. Getriebe nach Anspruch 1, **dadurch gekennzeichnet, daß** das antriebsseitige zweite Zwischenwellenlager (36) unmittelbar dem Zwischenritzel (37) benachbart ist und teilweise zwischen dem Abtriebszahnrad (31) und dem antriebsseitigen Abtriebswellenlager (26) gelegen ist.

3. Getriebe nach Anspruch 1 oder 2, **dadurch gekennzeichnet, daß** das Gehäuse-unter Verwendung eines Rohteils hergestellt ist, in welchem die erste und zweite Aufnahmebohrung (19, 21) zur Montageöffnung hin hinterschnittfrei ausgebildet sind.

4. Getriebe nach einem der Ansprüche 1 bis 3, **dadurch gekennzeichnet, daß** die erste und zweite Aufnahmebohrung (19, 21) auch im Fertigzustand zur Montageöffnung hin hinterschnittfrei ausgebildet sind.

5. Getriebe nach Anspruch 2, **dadurch gekennzeichnet, daß** ein drittes Zwischenwellenlager (41) antriebsseitig von dem Zwischenzahnrad (40) an dem Deckel (4, 7) vorgesehen ist und diesen zentriert.

6. getriebe nach einem der Ansprüche 1 bis 5, **dadurch gekennzeichnet, daß** der Deckel (4, 7) einen die Axialstellung des antriebsseitigen Abtriebswellenlagers (26) bestimmenden Vorsprung (33) aufweist.

7. Getriebe nach einem der Ansprüche 1 bis 6, **dadurch gekennzeichnet, daß** das antriebsseitige Lager (26) der Abtriebswelle (30) einen größeren Durchmesser als das Abtriebszahnrad (31) hat.

## Claims

1. Two-stage or three-stage cylindrical gear mechanism having a single-piece housing (1) which, at the drive input side, has an assembly opening which is closed off by means of a cover (4, 7) and through which a drive input pinion (6) is inserted, which drive input pinion (6) acts directly or via a first gear mechanism stage on the intermediate gearwheel (40) of an intermediate shaft (34) which supports an intermediate pinion (37) which drives the drive output gearwheel (31) of a drive output shaft (30), with it being possible for the drive output shaft (30) to be inserted, as a pre-assembled unit with the drive output gearwheel (31) and the drive output shaft bearings (26, 28) which are arranged at both sides of the drive output gearwheel (31), from the assembly opening into a first receiving bore (19), with it being possible for the intermediate shaft (34) to be inserted, as a pre-assembled unit with two first and second intermediate shaft bearings (35, 36) which are adjacent to the intermediate pinion (37) at both sides, from the assembly opening into a second receiving bore (21), and with a free assembly path being provided between the receiving bores (19, 21) and the assembly opening, and with the drive-output-side first intermediate shaft bearing (35) being directly adjacent to the intermediate pinion (37), **characterized in that** the second receiving bore (21) intersects the first receiving bore (19) and **in that** the drive-output-side first intermediate shaft bearing (35) is situated partially between the drive output gearwheel (31) and the drive-output-side drive output shaft bearing (28).

2. Mechanism according to Claim 1, **characterized in that** the drive-input-side second intermediate shaft bearing (36) is directly adjacent to the intermediate pinion (37) and is situated partially between the drive output gearwheel (31) and the drive-input-side drive output shaft bearing (26).

3. Mechanism according to Claim 1 or 2, **characterized in that** the housing is produced using a blank in which the first and second receiving bores (19, 21) are formed without an undercut in the direction of the assembly opening.

4. Mechanism according to one of Claims 1 to 3, **characterized in that** the first and second receiving bores (19, 21) are formed without an undercut in the direction of the assembly opening in the finished state too.

5. Mechanism according to Claim 2, **characterized in that** a third intermediate shaft bearing (41) is provided on the cover (4, 7) to the drive input side of the intermediate gearwheel (40), and centres said cover (4, 7).

6. Mechanism according to one of Claims 1 to 5, **characterized in that** the cover (4, 7) has a projection (33) which determines the axial position of the drive-input-side drive output shaft bearing (26).

7. Mechanism according to one of Claims 1 to 6, **characterized in that** the drive-input-side bearing (26) of the drive output shaft (30) has a greater diameter than the drive output gearwheel (31).

## Revendications

1. Réducteur à engrenages droits à deux ou trois étages, comprenant un carter d'une seule pièce (1) qui présente côté entraînement une ouverture de montage qui est fermée par un couvercle (4, 7) à travers lequel un pignon d'entrée de couple (6) est introduit qui agit directement ou par l'intermédiaire d'un premier étage de réducteur sur la roue dentée intermédiaire (40) d'un arbre intermédiaire (34) qui porte un pignon intermédiaire (37) qui entraîne la roue dentée de sortie de couple (31) d'un arbre de sortie de couple (30), dans lequel l'arbre de sortie de couple (30) peut être mis en place comme une unité préassemblée avec la roue dentée de sortie de couple (31) et les paliers d'arbre de sortie de couple (26, 28), disposés de part et d'autre de la roue dentée de sortie de couple (31), depuis l'ouverture de montage dans un premier alésage de réception (19), dans lequel l'arbre intermédiaire (34) peut être mis en place comme une unité préassemblée avec deux premier et deuxième paliers d'arbre intermédiaire (35, 36) adjacents de part et d'autre du pignon intermédiaire (37), depuis l'ouverture de montage dans un deuxième alésage de réception (21), et il existe une voie de montage libre entre les alésages de réception (19, 21) et l'ouverture de montage, et dans lequel le premier palier d'arbre intermédiaire (35) côté sortie de couple est immédiatement adjacent au pignon intermédiaire (37), **caractérisé en ce que** le deuxième alésage de réception (21) chevauche le premier alésage de réception (19) et **en ce que** le premier palier d'arbre intermédiaire (35) côté sortie de couple est situé en partie entre la roue dentée de sortie de couple (31) et le palier d'arbre de sortie de couple (28) côté sortie de couple.

2. Réducteur selon la revendication 1, **caractérisé en ce que** le deuxième palier d'arbre intermédiaire (36) côté entraînement est immédiatement adjacent au pignon intermédiaire (37) et situé en partie entre la roue dentée de sortie de couple (31) et le palier d'arbre de sortie de couple (26) côté entraînement.

3. Réducteur selon la revendication 1 ou 2, **caractérisé en ce que** le carter est fabriqué en utilisant une ébauche dans laquelle les premier et deuxième alésages de réception (19, 21) sont réalisés sans contre-dépouille en direction de l'ouverture de montage.

4. Réducteur selon l'une quelconque des revendications 1 à 3, **caractérisé en ce que** les premier et deuxième alésages de réception (19, 21) sont réalisés aussi à l'état fini sans contre-dépouille en direction de l'ouverture de montage.

5. Réducteur selon la revendication 2, **caractérisé en ce qu'**un troisième palier d'arbre intermédiaire (41) est prévu côté entraînement par rapport à la roue dentée intermédiaire (40) sur le couvercle (4, 7) et qu'il centre celui-ci.

6. Réducteur selon l'une quelconque des revendications 1 à 5, **caractérisé en ce que** le couvercle (4, 7) présente une saillie (33) déterminant la position axiale du palier d'arbre de sortie de couple (26) côté entraînement.

7. Réducteur selon l'une quelconque des revendications 1 à 6, **caractérisé en ce que** le palier côté entraînement (26) de l'arbre de sortie de couple (30) présente un diamètre supérieur à la roue dentée de sortie de couple (31).
